# EUROPEAN PATENT APPLICATION

(11) **EP 4 339 242 A1**
(43) Date of publication of application: **20.03.2024**
(21) Application number: 22807430.8
(22) Date of filing: 09.05.2022
(51) Int. Cl.: C08L 23/26, B32B 27/32, C08F 8/46, C08F 10/02, C08L 23/06, C08L 23/08, C08L 29/04, C08L 77/00

(54) **POLYMER COMPOSITION AND MOLDED ARTICLE THEREOF**

(30) Priority: 10.05.2021 JP 2021079460; 10.05.2021 JP 2021079461
(71) Applicant: Mitsubishi Chemical Corporation, Chiyoda-ku Tokyo 100-8251 (JP)
(72) Inventor: NAKANISHI, Shinji, Tokyo 100-8251 (JP); TAKASHIMA, Masaru, Tokyo 100-8251 (JP)
(74) Representative: Hoffmann Eitle
(86) International application number: PCT/JP2022/019648
(87) International publication number: WO 2022/239729

(57) **Abstract**

A polymer composition containing 100 parts by mass of a polyolefin-based polymer (a), 0.1 to 20 parts by mass of a polar polymer (b), and 0.1 to 25 parts by mass of an acid-modified polyolefin (d), the polar polymer (b) being at least one selected an ethylene-vinyl alcohol-based copolymer (b1) and a polyamide-based polymer (b2), wherein the acid-modified polyolefin (d) is a modified ethylene copolymer, the modified ethylene copolymer being a copolymer of an ethylene monomer and one or more a-olefin monomers having 4 to 8 carbon atoms, and the copolymer being modified with an unsaturated carboxylic acid and/or an anhydride thereof, wherein the modified ethylene copolymer has a melt flow rate (MFR: 190°C, 2.16 kg) of 15 to 39 g/10 minutes.

## Description

### Technical field

The present invention relates to a polymer composition. The present invention also relates to a molded article and multilayer packaging material obtained by molding the polymer composition.

### Background Art

A recycling technique for reducing the amount of plastic packaging waste has been known in which the following polymer composition is subjected to granulation/forming to be recycled as regrind layers or recycled layers of multilayer packaging materials:
polymer compositions prepared by collecting trimmings from and multilayer packaging material products in the production process of multilayer packaging materials using nonpolar polymers, such as polyolefin, and barrier polar polymers, such as ethylene-vinyl alcohol copolymer (EVOH), finely pulverizing the collected materials by grinding, mashing, or the like, and melt-kneading the pulverized materials.

However, the ethylene-vinyl alcohol copolymer and the polyolefin in the polymer composition thus obtained are less compatible. Consequently, the ethylene-vinyl alcohol copolymer forms aggregates in regrind or recycled layers. Such aggregates degrade transparency and mechanical strength, thus affecting the quality of recycled multilayer packaging materials. Hence, when such recycling is repeated, recyclability is poor.

For addressing such problems, a specific maleic anhydride-modified ethylene copolymer is known to be a compatibilizer used to compatibilize ethylene-vinyl alcohol copolymers with polyolefin. For example, Patent Literatures 1 and 2 specifically describe maleic anhydride-modified ethylene/octene copolymers as maleic anhydride-modified ethylene copolymers.

[Patent Literature 1] WO2014/070237 A1
[Patent Literature 2] WO2016/109023 A1

If a polymer composition containing the ethylene-vinyl alcohol copolymer and the polyolefin, and a maleic anhydride-modified ethylene copolymer described in Patent Literatures 1 and 2, specifically a maleic anhydride-modified ethylene-octene copolymer, is prepared in the above-described recycling process, the transparency of the resulting polymer composition is improved.

Unfortunately, this polymer composition produces foreign matter (called "eye mucus" sometimes) adherent to the vicinity of the extrusion outlet (die head) in the extrusion step for granulation/forming after melt-kneading the polymer composition in some cases. The foreign matter adherent to the vicinity of the extrusion outlet reduces productivity because it must be removed. Also, if the polymer composition is contaminated with the foreign matter after granulation/forming, the quality of the granulated or formed articles may be degraded. Additionally, when the polymer composition is repeatedly recycled to the regrind or recycled layer of multilayer packaging materials, recyclability may be degraded depending on the polyolefin.

### Summary of Invention

An object of the present invention is to provide a polymer composition which can reduce the generation of foreign matter during the extrusion process, and can also yield molded products with excellent transparency, and has excellent recyclability. The polymer composition includes those obtained from a process of recycling manufactured multilayer packaging materials or scrap materials generated in the manufacturing process of multilayer packaging materials using non polar polymers such as polyolefins and barrier polar polymers such as ethylene-vinyl-based alcohol-based copolymers.

The present inventors have found that the generation of foreign matter during the extrusion process can be reduced by using a specific acid-modified polyolefin in a predetermined ratio for a polyolefin polymer and a polar polymer such as an ethylene-vinyl alcohol-based copolymer and/or a polyamide-based polymer.

The present invention has the following features.

[1] A polymer composition comprising 100 parts by mass of a polyolefin-based polymer (a), 0.1 to 20 parts by mass of a polar polymer (b), and 0.1 to 25 parts by mass of an acid-modified polyolefin (d), the polar polymer (b) being at least one selected from an ethylene-vinyl alcohol-based copolymer (b1) and a polyamide-based polymer (b2),
   wherein the acid-modified polyolefin (d) is a modified ethylene copolymer, the modified ethylene copolymer being a copolymer of an ethylene monomer and one or more α-olefin monomers having 4 to 8 carbon atoms, and the copolymer being modified with an unsaturated carboxylic acid and/or an anhydride thereof,
   wherein the modified ethylene copolymer has a melt flow rate (MFR: 190°C, 2.16 kg) of 15 to 39 g/10 minutes.
[2] The polymer composition according to [1], further comprising an acid-modified polyolefin (c) having a melt flow rate (MFR: 190°C, 2.16 kg) of 0.01 g/10 min or more and less than 15 g/10 min.
[3] The polymer composition according to [2], wherein the content of the acid-modified polyolefin (c) is 0.1 to 20 parts by mass with respect to 100 parts by mass of the polyolefin-based polymer (a).
[4] The polymer composition according to any one of [1] to [3], wherein the acid-modified polyolefin (d) has a density of 0.855 to 0.895 g/cm³.
[5] The polymer composition according to any one of [1] to [4], wherein the acid-modified polyolefin (d) has a graft ratio of 0.1 to 1.0% by mass.
[6] The polymer composition according to any one of [1] to [5], wherein the acid-modified polyolefin (d) is a modified ethylene/butene copolymer.
[7] The polymer composition according to any one of [1] to [6], wherein the polyolefin polymer (a) is polyethylene.
[8] The polymer composition according to any one of [1] to [7], wherein the polar polymer (b) is an ethylene-vinyl alcohol-based copolymer (b1) having an ethylene unit content of 20 mol% or more and less than 50 mol%.
[9] A molded article obtained by molding the polymer composition according to any one of [1] to [8].
[10] A multilayer packaging material having a layer containing the polymer composition according to any one of [1] to [8].
[11] A method for producing the polymer composition according to any one of [1] to [8], wherein the method comprises a process of melting and kneading the polyolefin-based polymer (a), the polar polymer (b) being at least one selected from the ethylene-vinyl alcohol-based copolymer (b1) and the polyamide-based polymer (b2), and the acid-modified polyolefin (d).
[12] A method for producing the multilayer packaging material according to [10], wherein the method comprises a process of melt-molding the polyolefin-based polymer (a), the polar polymer (b) being at least one selected from the ethylene-vinyl-based alcohol copolymer (b1) and the polyamide-based polymer (b2), and the acid-modified polyolefin (d).

### Advantageous Effects of Invention

The polymer composition of the present invention can reduce foreign matter produced in the extrusion step without degrading the transparency of the polymer composition. The polymer composition includes those obtained from a process of recycling manufactured multilayer packaging materials or scrap materials generated in the manufacturing process of multilayer packaging materials using a polyolefin polymer and a barrier polar polymer of an ethylene-vinyl alcohol-based copolymer and/or a polyamide-based polymer. (Hereinafter, the polymer composition is also referred to as "recycling composition" or "regrind composition" in some cases.) These effects can be maintained even when such recycling is repeated. (The effects may be referred to as "recyclability" hereinafter.)

According to the polymer composition of the present invention, even when recycling is repeated, the generation of foreign matter during the extrusion process can be reduced. Therefore, molded products such as multilayer packaging materials having excellent transparency and no problem of foreign matter contamination can be molded with good yield and high production efficiency.

The polymer composition of the present invention is not limited in any way to a recycled material comprising polyolefin-based polymer and a barrier polar polymer of an ethylene-vinyl alcohol-based copolymer and/or a polyamide-based polymer. The present invention can be applied effectively even when either the polyolefin-based polymer or the barrier polar polymer or both are virgin resin. Description of Embodiments

Embodiments of the present invention will be described in detail below. The present invention is not limited to the following description and can be modified and practiced in any manner that is consistent with the scope of the present invention.

In this specification, when numerical values or physical property values are expressed by using "to" with preceding and following numbers, it is to be understood that the preceding and following numbers are included.

In the following description, monomeric units contained in a copolymer may be simply referred to as "units". For example, a monomeric unit based on propylene may be referred to as a "propylene unit", and similarly, monomeric units based on ethylene and *α*-olefin may be referred to as an "ethylene unit" and an "*α*-olefin unit", respectively.

In the present invention, the melt flow rate (MFR) and density of polymers and the grafting ratio of modified polymers are values measured as described below.

### <MFR>

MFR is measured according to JIS K7210 under the conditions of 190°C (for an ethylene-based polymer among a polyolefin-based polymers (a), an acid-modified polyolefin (c), and an acid-modified polyolefin (d))or 210°C (for a propylene-based polymer among a polyolefin-based polymers (a), an ethylene-vinyl alcohol-based copolymer (b1), and a polyamide-based polymer (b2)) and a load of 2.16 kg.

### <Density>

The density is measured by the immersion method according to JIS K 7112.

### <Grafting Ratio>

The grafting ratio (also referred to as the amount of modification or amount of grafting) of a modified polymer, such as an acid-modified polyolefin, is the proportion of the unsaturated carboxylic acid and/or its anhydride (hereinafter also referred to as "unsaturated carboxylic acid component") grafted onto the raw material polymer, described later, to the modified polymer when measured with an infrared spectrometer.

The proportion of the unsaturated carboxylic acid component can be determined, for example, by measuring the absorption specific to unsaturated carboxylic acids, more specifically the carbonyl characteristic absorption in the range of 1,900 cm⁻¹ to 1,600 cm⁻¹ (in the C=O stretching vibration band), of unsaturated carboxylic acids in a sample formed by pressing the modified polymer into a sheet of about 100 µm in thickness.

The grafting ratio can also be determined from a calibration curve previously prepared in the above manner.

### (Polymer composition)

The polymer composition of the present invention contains 100 parts by mass of a polyolefin-based polymer (a), 0.1 to 20 parts by mass of at least one polar polymer (b) selected from an ethylene-vinyl alcohol-based copolymer (b1) (hereinafter sometimes referred to as "EVOH (b1)") and a polyamide-based polymers (b2), and 0.1 to 25 parts by mass of an acid-modified polyolefin (d).

The acid-modified polyolefin (d) is a modified ethylene copolymer, the modified ethylene copolymer being a copolymer of an ethylene monomer and one or more *α*-olefin monomers having 4 to 8 carbon atoms, and the copolymer being modified with an unsaturated carboxylic acid and/or an anhydride thereof. The modified ethylene copolymer has a melt flow rate (MFR: 190°C, 2.16 kg) of 15 to 39 g/10 minutes.

The polymer composition of the present invention may further contain an acid-modified polyolefin (c) having a melt flow rate different from that of the acid-modified polyolefin (d), if necessary.

### [Polyolefin-based Polymer (a)]

Examples of polyolefin-based polymer (a) include polypropylene; propylene-based copolymers produced by copolymerizing propylene and α-olefin, such as ethylene, 1-butene, 1-hexene, or 4-methyl-1-pentene; polyethylenes, such as low-density polyethylene, linear low-density polyethylene, medium-density polyethylene, and high-density polyethylene; ethylene-based copolymers produced by copolymerizing ethylene and α-olefin, such as 1-butene, 1-hexene, or 4-methyl-1-pentene; and poly(1-butene) and poly(4-methyl-1-pentene).

Polyolefin-based polymer (a) may be an individual substance or a mixture of two or more substances containing different copolymer components or having different physical properties.

In particular, propylene-based polymers, such as polypropylene and propylene copolymers, and ethylene-based polymers, such as polyethylene and ethylene copolymers, are preferable as polyolefin-based polymer (a).

From the viewpoint of forming heat-resistant formed products, propylene-based polymers are preferred as polyolefin-based polymer (a), more preferably polypropylene.

From the viewpoint of obtaining highly transparent formed products, ethylene polymers are preferred as polyolefin-based polymer (a), more preferably high-density polyethylene.

The melt flow rate (MFR: 190°C or 210°C, 2.16 kg) of polyolefin-based polymer (a) is preferably 0.01 g/10 min to 10 g/10 min. When the MFR of polyolefin-based polymer (a) is 0.01 g/10 min or more, the difference in melt viscosity between polar polymer (b) and polyolefin-based polymer (a) is not so large that the polar polymer (b) can disperse favorably in the polymer composition. Thus, the resulting formed product has high impact resistance.

When the MFR of polyolefin-based polymer (a) is 10 g/10 min or less, the resulting formed product has high impact resistance. More preferably, the MFR of polyolefin-based polymer (a) is 5 g/10 g min or less, still more preferably 3 g/10 min or less, and particularly 2 g/10 min or less.

When polyolefin-based polymer (a) is a mixture of a plurality of polymers, the MFR of polyolefin-based polymer (a) is the weighted average of the MFRs of the polymers in the mixture by the mass ratio.

Similarly, when EVOH (b1), polyamide-based polymer (b2), acid-modified polyolefin (c), and acid-modified polyolefin (d), which are all described later, are mixtures of a plurality of polymers, their MFRs are determined as in the case of polyolefin-based polymer (a).

### [Polar Polymer (b)]

Polar polymer (b) is at least one barrier polar polymer selected from EVOH (b1) and polyamide-based polymer (b2).

Polar polymer (b) may be a mixture of one or two or more of EVOH (b1) and one or two or more of polyamide-based polymer (b2). The proportion of EVOH (b1) and polyamide-based polymer (b2) in the mixture is not particularly limited for such a mixture.

### <EVOH (b1)>

EVOH (b1) is produced by saponification of ethylene-vinyl ester copolymers. Vinyl acetate is a typical vinyl ester, but other fatty acid vinyl esters (vinyl propionate, vinyl pivalate, etc.) may also be used. Ethylene/vinyl ester copolymers are produced by any known polymerization process, such as solution polymerization, suspension polymerization, or emulsion polymerization. The saponification of ethylene-vinyl ester copolymers may also be performed by a known process.

The ethylene unit content of EVOH (b1) is determined according to ISO 14663 and is preferably 20% to 60% by mole. When the ethylene unit content is 20% by mole or more, EVOH (b1) in the polymer composition exhibits good gas barrier properties and melt formability under high humidity conditions. More preferably, the ethylene unit content of EVOH (b1) is 23% by mole or more. When the ethylene unit content is 60% by mole or more, barrier properties are good. More preferably, the ethylene unit content of EVOH (b1) is 55% by mole or less, still more preferably 50% by mole or less, and particularly less than 50% by mole.

The saponification degree of the vinyl ester unit of EVOH (b1), which is a value measured according to JIS K 6726 (note that EVOH is in a solution, uniformly dissolved in a water/methanol solvent), is preferably 80% by mole or more, more preferably 98% by mole or more, and still more preferably 99% by mole or more from the viewpoint of barrier properties, thermal stability, and moisture resistance.

The melt flow rate (MFR: 210°C, 2.16 kg) of EVOH (b1) is preferably 0.1 g/10 min to 100 g/10 min. When the MFR of EVOH (b1) is 100 g/10 min or less, the difference in melt viscosity between EVOH (b1) and acid-modified polyolefin (c) is not so large that the EVOH (b1) can disperse favorably in the polymer composition, providing good thermally stability. More preferably, the MFR of EVOH (b1) is 50 g/10 min or less, still more preferably 30 g/10 min or less. When the MFR of EVOH (b1) is 0.1 g/10 min or more, the difference in viscosity from acid-modified polyolefin (d) is not so large that the EVOH (b1) can disperse favorably in the polymer composition, providing good impact resistance. More preferably, the MFR of EVOH (b1) is 0.5 g/10 min or more.

EVOH (b1) may be copolymerized with polymerizable monomers other than ethylene and vinyl esters in a range not adversely affecting the advantageous effects of the invention, generally in the range of 5% by mole or less. Examples of such polymerizable monomers include α-olefins, such as propylene, isobutene, *α*-octene, *α*-dodecene, and *α-*octadecene; hydroxy group-containing *α*-olefins, such as 3-butene-1-ol, 4-pentene-1-ol, and 3-butene-1,2-diol, and their esterified or acylated derivatives, namely hydroxy group-containing α-olefin derivatives; hydroxymethylvinylidene diacetates, such as 1,3-diacetoxy-2-methylenepropane, 1,3-dipropionyloxy-2-methylenepropane, and 1,3-dibutylonyloxy-2-methylenepropane; unsaturated carboxylic acids and their salts, partial or complete alkyl esters, nitriles, amides, and anhydrides; unsaturated sulfonic acids and their salts; vinylsilane compounds; vinyl chloride; and styrene.

EVOHs subjected to "post-modification" such as urethanation, acetalization, cyanoethylation, and oxyalkylenation may also be used as EVOH (b1).

EVOH (b1) may be an individual substance or a mixture of two or more substances varying in vinyl ester or different in ethylene unit content or physical properties.

### <Polyamide-based polymer (b2)>

A known polymer can be used as the polyamide-based polymer (b2).

Specifically, homopolymers such as polycapramide (nylon 6), poly-*ω*-aminoheptanoic acid (nylon 7), poly-*ω*-aminononanoic acid (nylon 9), polyundecaneamide (nylon 11), and polylauryllactam (nylon 12) are examples.

Examples of polyamide-based copolymers include aliphatic polyamides such as polyethylenediamineadipamide (nylon 26), polytetramethyleneadipamide (nylon 46), polyhexamethyleneadipamide (nylon 66), polyhexamethylenesebacamide (nylon 610), polyhexamethylene dodecamide (nylon 612), polyoctamethylene adipamide (nylon 86), polydecamethylene adipamide (nylon 108), caprolactam/lauryllactam copolymer (nylon 6/12), caprolactam/*ω* - aminononanoic acid copolymer (nylon 6/9), caprolactam/hexamethylenediammonium adipate copolymer (nylon 6/66), lauryllactam/hexamethylenediammonium adipate copolymer (nylon 12/66), ethylenediamine adipamide/hexamethylenediammonium adipate copolymer (nylon 26/66), caprolactam/hexamethylenediammonium adipate/hexamethylenediammonium sebacate copolymer (nylon 66/610), and ethylene ammonium adipate/hexamethylenediammonium adipate/hexamethylenediammonium sebacate copolymer (nylon 6/66/610); aromatic polyamides such as polyhexamethyleneisophthalamide, polyhexamethyleneterephthalamide, polymetaxylyleneadipamide, hexamethyleneisophthalamide/terephthalamide copolymer, poly-p-phenylene terephthalamide and poly-p-phenylene-3,4'-diphenyl ether terephthalamide; amorphous polyamides; these polyamide-based polymers modified with aromatic amines such as methylenebenzylamine and meta-xylylene diamine; meta-xylylene diammonium adipate, terminal-modified polyamide polymers thereof, and the like. Among these, terminal-modified polyamide-based polymers are preferred.

The melt flow rate (MFR: 210°C, 2.16 kg) of polyamide-based polymer (b2) is preferably 0.1 g/10 min to 30 g/10 min. Polyamide-based polymer (b2) having an MFR in this range can react optimally with acid-modified polyolefin (d) as the compatibilizer to improve dispersibility.

Polyamide polymer (b2) may be an individual substance or a mixture of two or more substances containing different copolymer components or having different physical properties.

### [Acid-Modified Polyolefin (c)]

Acid-modified polyolefin (c) may be a graft-modified polyolefin obtained by graft-modifying a polyolefin with an acid or an olefin-based copolymer obtained by copolymerizing an olefin and an acid. Such acid-modified polyolefins may be used individually or in combination.

In particular, acid-modified polyolefin (c) is preferably modified polyolefin obtained by modification with an unsaturated carboxylic acid and/or its derivatives.

Preferably, the acid-modified polyolefin (c) is obtained by acid-modifying the same polyolefin-based polymers polyolefin-based polymer (a) from the viewpoint of good compatibility with polyolefin-based polymer (a). For example, if polyolefin-based polymer (a) is polypropylene, acid-modified polyolefin (c) is preferably acid-modified polypropylene. If polyolefin-based polymer (a) is polyethylene, acid-modified polyolefin (c) is preferably acid-modified polyethylene.

Examples of the unsaturated carboxylic acid used for graft-modification to acid-modified polyolefin (c) include acrylic acid, methacrylic acid, fumaric acid, itaconic acid, and maleic acid. Unsaturated carboxylic acid derivatives include acid anhydrides, such as maleic anhydride and itaconic anhydride. Among these, maleic anhydride is most preferred.

The melt flow rate (MFR: 190°C, 2.16 kg) of acid-modified polyolefin (c) is from 0.01 g/10 min to less than 15 g/10 min and preferably 0.5 g/10 min to 10 g/10 min. Acid-modified polyolefin (c) having an MFR in such a range has a viscosity well-balanced with the viscosities of polyolefin-based polymer (a) and acid-modified polyolefin (d). Consequently, the dispersibility of polar polymer (b) is improved, and the impact resistance of formed products is enhanced.

The density of acid-modified polyolefin (c) is preferably 0.855 g/cm³ to 0.955 g/cm³. Acid-modified polyolefin (c) having a density in this range can reduce foreign matter produced in the extrusion step without degrading transparency and prevent the decrease in the mechanical strength of the recycled film as well as keep its appearance good.

The amount of the unsaturated carboxylic acid and/or its derivatives contained in acid-modified polyolefin (c) is preferably 0.001% to 3% by mass to acid-modified polyolefin (c). Acid-modified polyolefin (c) containing such an amount of unsaturated carboxylic acid and/or its derivatives allows polar polymer (b) to disperse more sufficiently in the polymer composition of the present invention, increasing formability.

Acid-modified polyolefin (c) may be an individual substance or a mixture of two or more substances different in polymer form before modification or physical properties.

### [Acid-modified polyolefin (d)]

An acid-modified polyolefin (d) is a modified ethylene copolymer produced by modifying a copolymer of an ethylene monomer and one or two or more of *α*-olefin monomers with 4 to 8 carbon atoms (hereinafter referred to as "ethylene copolymer" or "raw material polymer") with an unsaturated carboxylic acid and/or its anhydride (herein after referred to as "unsaturated carboxylic acid component"). The melt flow rate (MFR: 190°C, 2.16 kg) of this acid-modified ethylene copolymer is 15 g/10 min to 39 g/10 min.

By using such an acid-modified polyolefin (d), the polar polymer (b) can be finely dispersed in the nonpolar polymer of the polyolefin-based polymer (a). As a result, in the recycled composition in which the polar polymer (b) is dispersed, the mechanical strength and transparency of the polyolefin-based polymer (a) can be improved.

The MFR (190°C, a load of 2.16 kg) of the acid-modified polyolefin (d) is 15 g/10 min to 39 g/10 min. The acid-modified polyolefin (d) having an MFR in this range can reduce foreign matter produced in the extrusion step without degrading transparency and prevent the decrease in mechanical strength of the film (hereinafter also referred to as recycled film) formed of the recycling composition as well as keep its appearance good.

The density of the acid-modified polyolefin (d) is preferably 0.855 g/cm³ to 0.895 g/cm³. The acid-modified polyolefin (d) having a density in this range can reduce foreign matter produced in the extrusion step without degrading transparency and prevent the decrease in mechanical strength of the recycled film as well as keep its appearance good.

### <Modified ethylene copolymer>

Examples of α-olefin monomers having 4 to 8 carbon atoms constituting the modified ethylene copolymer of the acid-modified polyolefin (d) include one or more of 1-butene, 3-methyl-1-butene, 1-pentene, 4-methyl-1-pentene, 4,4-dimethyl-1-pentene, 1-hexene, 4-methyl-1-hexene, 1-heptene and 1-octene can be used. Among these, α-olefin monomers having 4 to 6 carbon atoms are preferred, and α-olefin monomers having 4 carbon atoms, i.e. 1-butene, are particularly preferred.

Examples of modified ethylene copolymers include modified ethylene-butene copolymers, modified ethylene-hexene copolymers, and modified ethylene-octene copolymers. Among these, from the viewpoint of recyclability, modified ethylene-butene copolymers and modified ethylene-hexene copolymers are preferable, and modified ethylene-butene copolymers are particularly preferable.

The modified ethylene copolymer may contain monomeric units other than the ethylene monomer and the above-described α-olefin monomers.

### <Ethylene Copolymer>

The ethylene copolymer to be modified with an unsaturated carboxylic acid component may be any known ethylene copolymer without particular limitation, provided that the above-described modified ethylene copolymer can be obtained.

The MFR (190°C, a load of 2.16 kg) of the ethylene copolymer to be modified i. e. raw material polymer, is preferably, but is not limited to, 18 g/10 min to 50 g/10 min. The raw material polymer having an MFR in this range tends to be easier to modify into the intended modified ethylene copolymer even if the MFR is changed by the modification.

Preferably, the raw material polymer has a density of 0.855 g/cm³ to 0.895 g/cm³.

Commercially available products may also be used as the raw material polymer suitable for the present invention. For example, it may be one satisfying the properties as mentioned above, appropriately selected from "TAFMER (registered trademark)" series produced by Mitsui Chemicals, Inc.

The ethylene copolymer, or raw material polymer, may be an individual substance or a combination of two or more substances having different physical properties or compositions.

### <Graft Modification>

Examples of unsaturated carboxylic acids that graft-modify ethylene copolymers include *α*,*β-*ethylenically unsaturated carboxylic acids such as acrylic acid, maleic acid, fumaric acid, tetrahydrofumaric acid, itaconic acid, citraconic acid, crotonic acid and isocrotonic acid. Examples of anhydrides of unsaturated carboxylic acids include 2-octen-1-yl succinic anhydride, 2-dodecen-1-yl succinic anhydride, 2-octadecen-1-yl succinic anhydride, maleic anhydride, 2,3-dimethylmaleic anhydride, bromomaleic anhydride, dichloromaleic anhydride, citraconic anhydride, itaconic anhydride, 1-butene-3,4-dicarboxylic anhydride, 1-cyclopentene-1,2-dicarboxylic anhydride, 1,2,3,6-tetrahydrophthalic anhydride, 3,4,5,6-tetrahydrophthalic anhydride, exo-3,6-epoxy-1,2,3 ,6-tetrahydrophthalic anhydride, 5-norbornene-2,3-dicarboxylic anhydride, methyl-5-norbornene-2,3-dicarboxylic anhydride, endo-bicyclo[2.2.2]octo-5 -ene-2,3-dicarboxylic anhydride, and bicyclo[2.2.2]oct-7-ene-2,3,5,6-tetracarboxylic anhydride.

Such an unsaturated carboxylic acid component may be appropriately selected according to the ethylene copolymer to be modified and modification conditions. The unsaturated carboxylic acid component may be an individual compound or a combination of two or more compounds.

The unsaturated carboxylic acid component may be dissolved in an organic solvent before use.

The graft modification of an ethylene copolymer can be performed by adding an unsaturated carboxylic acid component and graft-polymerizing the unsaturated carboxylic acid component onto the ethylene copolymer, preferably, in the presence of a radical generator.

Examples of radical generators used here include organic and inorganic peroxides such as t-butyl hydroperoxide, cumene hydroperoxide, 2,5-dimethylhexane-2,5-dihydroperoxide, 2,5-dimethyl-2,5 -bis(t-butyloxy)hexane, 3,5,5-trimethylhexanoyl peroxide, t-butyl peroxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds such as 2,2'-azobisisobutyronitrile, 2,2' -azobis(isobutyramide) dihalide, 2,2'-azobis[2-methyl-N-(2-hydroxyethyl)propionamide], and azodi-t-butane; carbon radical generators such as dicumyl.

The radical generator may be selected as desired according to the ethylene copolymer to be subjected to modification reaction, the unsaturated carboxylic acid component added as the modification agent, and modification conditions. The radical generator may be an individual compound or a combination of two or more compounds.

The radical generator may be dissolved in an organic solvent before use.

The modification reaction for obtaining the modified ethylene copolymer of the present invention may be conducted by various known reaction processes, including a melt-kneading reaction, a solution reaction, and a suspension-dispersion reaction. In general, the modification reaction is preferably a melt-kneading reaction.

For the melt-kneading reaction, the above-mentioned constituents can be uniformly mixed in a predetermined proportion and then melt-kneaded. A Henschel mixer, ribbon blender, V-type blender, or the like may be used for mixing. Melt-kneading uses a Banbury mixer, kneader, roll, single-screw kneading extruder, or multi-screw kneading extruder, such as a twin screw kneading extruder.

Melt-kneading is generally performed at 100°C or more, preferably 120°C or more, and more preferably 150°C or more, and also generally at 300°C or less, preferably 280°C or less, and more preferably 250°C or less, to prevent the polymer from thermally degrading.

The amount of the unsaturated carboxylic acid component added as the modification agent is generally 0.01 part by mass or more, preferably 0.05 part by mass or more, and more preferably 0.1 part by mass or more, and also generally 30 parts by mass or less, preferably 5 parts by mass or less, and more preferably 4 parts by mass or less, relative to 100 parts by mass of the raw material polymer, namely ethylene copolymer. Such an amount of unsaturated carboxylic acid added enables economical and sufficient modification.

The amount of the radical generator added is generally 0.001 part by mass or more, preferably 0.005 part by mass or more, and more preferably 0.01 part by mass or more, and also generally 1 part by mass or less, preferably 0.5 part by mass or less, and more preferably 0.1 part by mass or less, relative to 100 parts by mass of the raw material polymer, namely ethylene copolymer. By controlling the amount of the radical generator added equal to or higher than the above lower limit, sufficient modification can be ensured. By controlling the amount of the radical generator lower than or equal to the above upper limit, the increase in molecular weight (increase in viscosity) of the ethylene copolymer during modification can be suppressed in a desired range, and the intended modified ethylene copolymer tends to be easy to obtain.

The modification reaction includes mainly a graft polymerization reaction that grafts the unsaturated carboxylic acid component onto the ethylene copolymer and also a crosslinking reaction. This crosslinking tends to increase the molecular weight of the resulting modified product and increase the melt viscosity accordingly. Therefore, excessive use of the radical generator facilitates the graft polymerization reaction but, undesirably, easily causes a crosslinking reaction leading to an increased melt viscosity.

### <Grafting Ratio>

Preferably, the grafting ratio of the modified ethylene copolymer of the acid-modified polyolefin (d) is 0.1% to 1.0% by mass, more preferably 0.6% to 1.0% by mass, and still more preferably 0.8% to 1.0% by mass. When the grafting ratio is equal to or higher than the above lower limit, good recyclability can be obtained. When the grafting ratio is excessively high, a lot of discoloration or the like occurs, adversely affecting the appearance or the kike of the resulting recycled film. Accordingly, the grafting ratio of the modified ethylene copolymer of the acid-modified polyolefin (d) is preferably lower than or equal to the above upper limit.

Only one type of acid-modified polyolefin (d) may be used, or two or more types having different physical properties may be mixed and used.

### [Proportions in Composition]

The polymer composition of the present invention contains 0.1 to 20 parts by mass of polar polymer (b) and 0.1 to 25 parts by mass of acid-modified polyolefin (d) relative to 100 parts by mass of polyolefin-based polymer (a).

If the proportion of polar polymer (b) is less than 0.1 part by mass, polar polymer (b) cannot provide sufficient barrier properties. If the proportion of polar polymer (b) exceeds 20 parts by mass, the impact resistance of the resulting formed product tends to be reduced. Preferably, the proportion of polar polymer (b) is 1 to 15 parts by mass, more preferably 5 to 10 parts by mass, relative to 100 parts by mass of polyolefin-based polymer (a).

If the proportion of acid-modified polyolefin (d) is less than 0.1 part by mass, the effect of polar polymer (b) finely dispersed in the polymer composition cannot be sufficiently produced, and the decrease in the transparency of the recycling composition and foreign matter produced during the extrusion step cannot be sufficiently prevented. If the proportion of acid-modified polyolefin (d) exceeds 25 parts by mass, foreign matter production cannot be sufficiently prevented during the extrusion step. Preferably, the proportion of acid-modified polyolefin (d) is 0.5 to 15 parts by mass, more preferably 1 to 10 parts by mass, relative to 100 parts by mass of polyolefin-based polymer (a).

When the polymer composition of the present invention contains acid-modified polyolefin (c), the proportion of acid-modified polyolefin (C) is preferably 0.1 to 20 parts by mass relative to 100 parts by mass of polyolefin-based polymer (a), particularly 1 to 18 parts by mass, more particularly 5 to 15 parts by mass. Acid-modified polyolefin (c) contained in such a proportion allows polar polymer (b) to disperse more favorably in the polymer composition to increase the impact resistance of the resulting formed product.

### [Other Constituents]

The polymer composition of the present invention may contain other polymers or optional additives (these are hereinafter referred to as "other constituents") apart from polyolefin-based polymer (a), polar polymer (b), acid-modified polyolefin (c), and acid-modified polyolefin (d) depending on the application to the extent that the composition does not significantly impair the advantageous effect of the present invention. Such other constituents may be used individually or in combination.

Examples of the additives include antioxidants, UV absorbers, plasticizers, lubricants, fillers, and antistatic agents. The total additive content of the polymer composition of the present invention is generally 50% by mass or less, preferably 20% by mass or less, and more preferably 10% by mass or less.

### [Preparation of Polymer Composition]

The constituents of the polymer composition of the present invention may be mixed in any manner without particular limitation, and examples include:
a manner of dry blending polyolefin-based polymer (a), polar polymer (b), and acid-modified polyolefin (d) and, optionally, acid-modified polyolefin (c) and other constituents at one time for melt-kneading;
a manner of previously melt-kneading polyolefin-based polymer (a), polar polymer (b), and acid-modified polyolefin (d) and, optionally, a part or some of acid-modified polyolefin (c) and other constituents and adding the rest of the constituents, followed by melt-kneading; and
a manner of mixing a multilayer structure containing polyolefin-based polymer (a), polar polymer (b), and acid-modified polyolefin (d) and, optionally, some or all of acid-modified polyolefin (c) and other constituents with the rest of the constituents, followed by melt-kneading.

For preparing the polymer composition of the present invention, preferably, multilayer packaging materials including a polyolefin-based polymer (a) layer and a polar polymer (b) layer or multilayer packaging materials including a polyolefin-based polymer (a) layer, a polar polymer (b) layer, and an acid-modified polyolefin (c) layer are collected and melt-kneaded together with a compatibilizer containing acid-modified polyolefin (d). The collected multilayer packaging materials mentioned herein refer to scraps, for example, with burrs or the like, produced when multilayer packaging material is formed into a shape or rejected products in forming.

The additive added when such collected materials are melt-kneaded is called a compatibilizer, and a compatibilizer containing acid-modified polyolefin (d) is used herein.

The acid-modified polyolefin (d) content of the compatibilizer is preferably 5% to 100% by mass. More preferably, the acid-modified polyolefin (d) content is 10% by mass or more, still more preferably 20% by mass or more, and particularly 50% by mass or more.

In melt-kneading, specifically, the constituents are uniformly mixed in a predetermined proportion with a Henschel mixer, ribbon blender, V-type blender, or the like and then kneaded in a multi-screw kneading extruder, such as a twin-screw kneading extruder TEX 25 manufactured by the Japan Steel Works, Ltd.

As with the temperature in the graft modification to the acid-modified polyolefin (d), the melt-kneading temperature of the constituents is generally 100°C to 300°C, preferably 120°C to 280°C, and more preferably 150°C to 250°C.

### (Molded Article)

The molded article of the present invention is formed by molding the polymer composition of the present invention.

The formed product of the present invention may be in the form of, for example, films, sheets, tapes, cups, trays, tubes, bottles, pipes, filaments, profile extrusions, and indeterminate shape products.

Any forming process applicable to common polymer compositions can be applied to the forming process of the polymer composition of the present invention without particular limitation.

For example, extrusion, blow molding, injection molding, thermoforming, or the like may be applied.

In forming, a heat stretching process is often applied to improve the physical properties of the formed product or to form a container with a desired shape. The heat stretching process mentioned here refers to the operation of uniformly forming a uniformly heated formed product in a film, sheet, or parison shape into cups, trays, tubes, bottles, or films by chucking, plugging, vacuum force, pressure air force, blowing, or other means. Stretching methods include roll stretching, tenter stretching, tubular stretching, stretch-blow, vacuum forming, compressed-air forming, and vacuum pressure forming. Stretching may be uniaxial or biaxial. In biaxial stretching, either simultaneous or sequential biaxial stretching may be used. The temperature for stretching is generally 60°C to 170°C and preferably 80°C to 160°C.

### [Multilayer packaging material]

The multilayer packaging material of the present invention is a multilayer packaging material having a layer containing the polymer composition of the present invention. The multilayer packaging material of the present invention can be produced by the method for producing a multilayer packaging material of the present invention comprising a step of melt-molding the polyolefin-based polymer (a), the polar polymer (b), the acid-modified polyolefin (d), and optionally the acid-modified polyolefin (c).

That is, the polymer composition of the present invention can be used as at least one layer (regrind layer) of the multilayer packaging material.

A multilayer packaging material containing a regrind layer will be described below.

### [Multilayer packaging material containing regrind layer]

The multilayer packaging material containing a regrind layer should have at least one regrind layer (sometimes referred to as a "Reg layer") made of the polymer composition of the present invention in its lamination. Generally, a multilayer packaging material preferably contains, in addition to the regrind layer, a polyolefin-based polymer layer (hereinafter sometimes referred to as "PO layer"), an EVOH layer and/or a polyamide-based polymer layer (hereinafter sometimes referred to as "PA layer") ), and optionally an acid-modified polyolefin (c) layer.

Specific examples of the layer structure of the Reg layer-containing multilayer packaging material include the following.
PO layer/Reg layer/acid-modified polyolefin (c) layer/EVOH layer or PA layer,
PO layer/Reg layer/acid-modified polyolefin (c) layer/EVOH layer or PA layer/acid-modified polyolefin (c) layer/PO layer,
PO layer/Reg layer/acid-modified polyolefin (c) layer/EVOH layer or PA layer/acid-modified polyolefin (c) layer/Reg layer/PO layer,
Reg layer/EVOH layer or PA layer, Reg layer/acid-modified polyolefin (c) layer/EVOH layer or PA layer,
Reg layer/acid-modified polyolefin (c) layer/EVOH layer or PA layer/acid-modified polyolefin (c) layer/EVOH layer or PA layer,
Reg layer/acid-modified polyolefin (c) layer/EVOH layer or PA layer/acid-modified polyolefin (c) layer/PO layer,
Reg layer/acid-modified polyolefin (c) layer/EVOH layer or PA layer/acid-modified polyolefin (c) layer/Reg layer/PO layer,
PO layer/acid-modified polyolefin (c) layer/EVOH layer or PA layer/Reg layer/EVOH layer or PA layer/acid-modified polyolefin (c) layer/PO layer.

In addition, examples of the layer structure of the Reg layer-containing multilayer packaging material including the EVOH layer and the PA layer include the following.
PO layer/Reg layer/acid-modified polyolefin (c) layer/PA layer/EVOH layer/PA layer/acid-modified polyolefin (c) layer/Reg layer/PO layer,
PO layer/Reg layer/acid-modified polyolefin (c) layer/PA layer/EVOH layer/PA layer/acid-modified polyolefin (c) layer/PO layer,
PO layer/acid-modified polyolefin (c) layer/PA layer/EVOH layer/PA layer/acid-modified polyolefin (c) layer/Reg layer/PO layer,
PA layer/acid-modified polyolefin (c) layer/PO layer/Reg layer/PO layer/acid-modified polyolefin (c) layer/PA layer/EVOH layer/acid-modified polyolefin (c) layer/Reg layer/PO layer,
PA layer/acid-modified polyolefin (c) layer/PO layer/Reg layer/PO layer/acid-modified polyolefin (c) layer/PA layer/EVOH layer/acid-modified polyolefin (c) layer/PO layer,
PA layer/acid-modified polyolefin (c) layer/PO layer/acid-modified polyolefin (c) layer/PA layer/EVOH layer/acid-modified polyolefin (c) layer/Reg layer/PO layer,
PA layer/acid-modified polyolefin (c) layer/Reg layer/acid-modified polyolefin (c) layer/PA layer/EVOH layer/acid-modified polyolefin (c) layer/PO layer,
PA layer/acid-modified polyolefin (c) layer/PO layer/Reg layer/PO layer/acid-modified polyolefin (c) layer/EVOH layer/acid-modified polyolefin (c) layer/PO layer,
PA layer/acid-modified polyolefin (c) layer/PO layer/acid-modified polyolefin (c) layer/EVOH layer/acid-modified polyolefin (c) layer/Reg layer/PO layer,
PA layer/acid-modified polyolefin (c) layer/Reg layer/acid-modified polyolefin (c) layer/EVOH layer/acid-modified polyolefin (c) layer/PO layer.

The thickness of each layer of the regrind layer-containing multilayer packaging material cannot be generalized depending on the layer structure, the type of polyolefin-based polymer, the application, the shape of the container, the required physical properties, etc. For example, the thickness of the regrind layer is usually 5-5000 µm, preferably 30-1000 µm. The thickness of the EVOH layer is usually 5-500 µm, preferably 10-200 µm. The thickness of the polyolefin-based polymer layer is usually 5-5000 µm, preferably 30-1000 µm. When having an acid-modified polyolefin (c) layer, the thickness of the acid-modified polyolefin (c) layer is usually 5 to 400 µm, preferably 10 to 150 µm.

The thickness ratio of the regrind layer/polyolefin-based polymer layer is usually 1/5 to 10/1, preferably 1/2 to 5/1.

The thickness ratio of the regrind layer/EVOH layer is usually 1/1 to 100/1, preferably 5/1 to 20/1.

### [Method for producing multilayer packaging material containing regrind layer]

The multilayer packaging material containing a regrind layer can be produced, for example, by using the same type of resin as the material for the multilayer packaging material, which is the recovered material, and molding it by the same type of method. In this case, the method for molding the polymer composition of the present invention is not particularly limited, and any molding method applicable to general polymer compositions can be applied. Specifically, the polyolefin-based polymer used in the polyolefin-based polymer layer, the EVOH used in the EVOH layer, and the acid-modified polyolefin (c) used in the acid-modified polyolefin (c) layer exemplified in the laminate to be the recovered product can be used, and the laminate can be produced by a lamination method such as, for example, extrusion molding, blow molding, injection molding, thermoforming, etc., especially coextrusion molding and coinjection molding, more especially coextrusion.

The multi-layer packaging materials thus obtained are useful for containers for various materials such as general foods, seasonings such as mayonnaise and dressings, fermented foods such as miso, oily foods such as salad oil, beverages, and cosmetics, and pharmaceuticals regardless of whether they are refurbished or re-refurbished products.

### EXAMPLES

Specific embodiments of the present invention will be described in further detail with reference to examples hereinafter. The present invention is not limited to the following examples as long as the present invention is within the gist thereof.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

The raw materials used in the preparation of the modified copolymer and the regrind composition in the following examples and comparative examples are as follows.

### [Modified Copolymer Raw Materials]

### <Ethylene-butene copolymer>

- e-1: TAFMER (registered trademark) A35070S (MFR (190°C, load 2.16 kg): 35 g/10 minutes, density: 0.870 g/cm³) manufactured by Mitsui Chemicals, Inc.
- e-2: TAFMER (registered trademark) A4085S (MFR (190°C, load 2.16 kg): 3.6 g/10 minutes, density: 0.885 g/cm³) manufactured by Mitsui Chemicals, Inc.
- e-3: TAFMER (registered trademark) A20085S (MFR (190°C, load 2.16 kg): 18 g/10 minutes, density: 0.885 g/cm³) manufactured by Mitsui Chemicals, Inc.
- e-4: TAFMER (registered trademark) A70050S (MFR (190°C, load 2.16 kg): 70 g/10 minutes, density: 0.893 g/cm³) manufactured by Mitsui Chemicals, Inc.

### <Radical generator>

• Organic peroxide Perhexa 25B manufactured by NOF Corporation

### <Unsaturated carboxylic acid component>

- Maleic anhydride commercial product

### <Ethylene-octene copolymer>

- o-1: AFFINITY (registered trademark) GA1900 (MFR (190°C, load 2.16 kg): 1000 g/10 minutes, density: 0.870 g/cm³) manufactured by Dow inc.

### [Regrind composition material]

### <Polyolefin-based polymer (a)>

- PE: Polyethylene Novatec (registered trademark) UF230 (MFR (190°C, load 2.16 kg): 1 g/10 minutes, density: 0.921 g/cm³) manufactured by Japan Polyethylene Corporation
- PP: Polypropylene Novatec (registered trademark) EA7AD (MFR (210°C, load 2.16 kg): 1.4 g/10 minutes, density: 0.9 g/cm³) manufactured by Japan Polypropylene Corporation

### < EVOH (b1)>

- EVOH (MFR (210°C, load 2.16 kg): 3.8 g/10 minutes, density: 1.19 g/cm³, ethylene unit content: 32 mol%, degree of saponification: 99.9 mol%)

### <Polyamide-based polymer (b2)>

- Ny: Polyamide-based polymer 1022 (MFR (210°C, load 2.16 kg): 6.6 g/10 minutes, density: 1.13 g/cm³) manufactured by DSM Japan K. K.

### <Acid-modified polyolefin (c)>

- c-1: Maleic anhydride-modified polyethylene Modic (registered trademark) M512 (MFR (190°C, load 2.16 kg): 1.0 g/10 minutes, density: 0.900 g/cm³) manufactured by Mitsubishi Chemical Corporation
- c-2: Maleic anhydride-modified polypropylene P604V (MFR (190°C, load 2.16 kg): 1.0 g/10 minutes, MFR (230°C, load 2.16 kg): 3.2 g/10 minutes, density: 0.9 g/cm³) manufactured by Mitsubishi Chemical Corporation

### [Preparation of Modified Copolymer]

### <Synthesis Example 1>

A dry-blended mixture of 100 parts by mass of constituent (e-1), 0.03 part by mass of a radical generator, and 0.15 part by mass of an unsaturated carboxylic acid component was melt-kneaded in a twin-screw extruder (TEX 25 *α* III manufactured by Japan Steel Works, Ltd., D = 25 mm, L/D = 52.5) at a set temperature of 230°C, a screw rotational speed of 400 rpm, an extrusion rate of 20 kg/h, and strand-cut into pellets of maleic anhydride-modified ethylene/butene copolymer (d-1).

The MFR (190°C, 2.16 kg), density, and grafting ratio of the resulting modified ethylene/butene copolymer (d-1) were measured by the above-described methods. The measurement results are presented in Table-1.

### <Synthesis Examples 2 to 8>

Modified copolymers (d-2) to (d-8) were each prepared in the same manner as Synthesis Example 1 except for changing the composition to that presented in Table-1. The MFR (190°C, 2.16 kg), density, and grafting ratio of the resulting modified copolymers were measured as in Synthesis Example 1. The measurement results are presented in Table-1.

### [Table 1]

**<Table-1>**

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 |
|---|---|---|---|---|---|---|---|---|---|---|
| Modified copolymer | | | d-1 | d-2 | d-3 | d-4 | d-5 | d-6 | d-7 | d-8 |
| Compounding composition (parts by mass) | Ethylene-butene copolymer | e-1 (A35070S) | 100 | 100 | 100 | 100 | | | | |
| | | e-2 (A4085S) | | | | | 100 | | | |
| | | e-3 (A20085S) | | | | | | 100 | | |
| | | e-4 (A70050S) | | | | | | | 100 | |
| | Ethylene-octene copolymer | o-1 (AFFINITY GA 1900) | | | | | | | | 100 |
| | Component (8): Radical generator | | 0.03 | 0.03 | 0.03 | 0.04 | 0.03 | 0.03 | 0.03 | 0.03 |
| | Component (C): Unsaturated carboxylic acid component | | 0.15 | 0.70 | 1.20 | 0.7 | 0.70 | 0.7 | 0.70 | 1.00 |
| Measurement result | Grafting rate | mass% | 0.1 | 0.5 | 0.9 | 0.5 | 0.6 | 0. 5 | 0.6 | 0.9 |
| | MFR(190°C, 2.16kg) | g/10 minutes | 32 | 28 | 27 | 22 | 2 | 13 | 59 | 640 |
| | Density | g/cm³ | 0.870 | 0.870 | 0.870 | 0.870 | 0.885 | 0.885 | 0.893 | 0.879 |
| Remarks | | | Example of the Present Invention | | | | Comparative Example | | | |

### [Preparation and Evaluation of Polyethylene-based Regrind Composition]

### <Example 1>

To 77 parts by mass of polyethylene NOVATEC (registered trademark) UF230 produced by Japan Polyethylene Corporation, 10 parts by mass of Soarnol (registered trademark) DC3203RB produced by Mitsubishi Chemical Corporation, and 10 parts by mass of Modic (registered trademark) M512 produced by Mitsubishi Chemical Corporation, 3 parts by mass of modified ethylene/butene copolymer (d-1) of Synthesis Example 1 was mixed as the compatibilizer by dry blending. The resulting mixture was melt-kneaded in a twin-screw extruder (TEX 25 α III manufactured by Japan Steel Works, Ltd., D = 25 mm, L/D = 52.5) at a set temperature of 210°C, a screw rotational speed of 400 rpm, an extrusion rate of 20 kg/h and strand-cut into pellets of a regrind composition. The resulting regrind composition was used as a 1-pass product. The regrind composition of the resulting 1-pass product was further melt-kneaded again in the twin-screw extruder under the above conditions, and the resulting regrind composition was used as a 2-pass product. The following (1) to (4) were evaluated for these compositions. The results are presented in Table-2A.

### <Examples 2 to 8 and 10 and Comparative Examples 1 to 7>

Except for changing the composition to that presented in Tables-2A and 2B, 1-pass and 2-pass products of each regrind composition were produced in the same manner as in Example 1. The following (1) to (4) were evaluated for the resulting regrind compositions. The results are presented in Tables-2A and 2B.

### <Example 9>

To 77 parts by mass of polyethylene NOVATEC (registered trademark) UF230 produced by Japan Polyethylene Corporation, 10 parts by mass of Ny 1022 produced by DSM Japan K. K., and 10 parts by mass of Modic (registered trademark) M512 produced by Mitsubishi Chemical Corporation, 3 parts by mass of modified ethylene/butene copolymer (d-3) of Synthesis Example 3 was mixed as the compatibilizer by dry blending. The resulting mixture was melt-kneaded in a twin-screw extruder (TEX 25 α III manufactured by Japan Steel Works, Ltd., D = 25 mm, L/D = 52.5) at a set temperature of 210°C, a screw rotational speed of 400 rpm, an extrusion rate of 20 kg/h and strand-cut into pellets of a regrind composition. The resulting regrind composition was used as a 1-pass product. The regrind composition of the resulting 1-pass product was further melt-kneaded again in the twin-screw extruder under the above conditions, and the resulting regrind composition was used as a 2-pass product. The following (1) to (4) were evaluated for these compositions. The results are presented in Table-2A.

### [Evaluation]

### (1) Transparency

Films of 0.1 mm in thickness were formed with a single layer T-die film forming machine (extruder: 50 mm in diameter, lip opening: 0.3 mm) manufactured by GSI Creos Corporation at a set temperature of 200°C, a screw rotational speed of 20 rpm. The resulting films were visually compared to each other. Highly transparent films were determined to be good, slightly opaque films were determined to be fair, and opaque films were determined to be poor.

### (2) Internal HAZE

The internal Haze of the 0.1 mm thick films formed above was measured at n = 3 with a HAZE meter and averaged. The internal Haze is a measure of the dispersion of EVOH or Ny in a polymer composition. The smaller the internal Haze value, the finer and better the dispersion of EVOH or Ny. In this evaluation, the films exhibiting an internal Haze value of 20% or less are considered good in EVOH or Ny dispersion.

### (3) Tensile Strength at Break

The tensile strength at break of the 0.1 mm thick films formed above was measured at n = 3 according to JIS K 7161 and averaged. The films having a tensile strength at break of 25 MPa or more can be good in mechanical strength.

### (4) Amount of Adherent Foreign Matter

Using a twin-screw extruder (manufactured by Japan Steel Works, Ltd., TEX25*α*III, D = 25 mm*φ*, L/D = 52.5), the regrind composition was extruded at a set temperature of 210°C, a screw rotation speed of 400 rpm, and an extrusion rate of 20 kg/h. During this operation, the amount of low-molecular-weight pyrolyzate precipitated on the die head was determined visually.

The amount of contaminant adhering to the die head was evaluated after extruding for 1 hour. When there was no adhesion, it was evaluated as ⊚, when the adhesion amount was small, it was evaluated as O, when the adhesion amount was slightly large, it was evaluated as Δ when the adhesion amount was large, it was evaluated as ×.

### (5) Recyclability

The regrind composition obtained above was subjected to melt-kneading again with the twin-screw extruder under the conditions described in the preparation of the regrind composition. The obtained recycled composition was evaluated for the above (1) to (4) transparency, internal HAZE, tensile breaking strength, and contaminant adhesion amount. This evaluation result was compared with the properties of the regrind composition obtained in the first melt-kneading. When the comparison results were equivalent, it was evaluated as O, when the characteristics were slightly deteriorated, it was evaluated as Δ, and when the characteristics were deteriorated, it was evaluated as ×.

### [Table 2A]

**<Table-2A>**

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Regrind composition formulation (parts by mass) | PE | | UF230 | 77 | 77 | 77 | 79 | 75 | 70 | 60 | 82 | 77 | 77 |
| | EVOH | | DC3203RB | 10 | 10 | 10 | 10 | 10 | 10 | 10 | 5 | | 10 |
| | Ny | | 1022 | | | | | | | | | 10 | |
| | c-1 | | M512 | 10 | 10 | 10 | 10 | 10 | 10 | 10 | 10 | 10 | 10 |
| | Compatibilizer | Example of the Present Invention | d-1 (32, 0.870, 0.1) | 3 | | | | | | | | | |
| | | | d-2 (28, 0.870, 0.5) | | 3 | | | | | | | | |
| | | | d-3 (27, 0.870, 0.9) | | | 3 | 1 | 5 | 10 | 20 | 3 | 3 | |
| | | | d-4 (22, 0.870, 0.5) | | | | | | | | | | 3 |
| | | Comparative Example | d-5 ( 2, 0.885, 0.6) | | | | | | | | | | |
| | | | d-6 (13, 0.885, 0.5) | | | | | | | | | | |
| | | | d-7 (59, 0.893, 0.6) | | | | | | | | | | |
| | | | d-8 (640, 0.879, 0.9) | | | | | | | | | | |
| Evaluation results | Transparency | | | Δ | Δ | ○ | Δ | ○ | ○ | ○ | ○ | ○ | ○ |
| | Internal HAZE(%) | | | 17 | 15 | 15 | 18 | 13 | 13 | 13 | 5 | 9 | 15 |
| | Tensile Strength at Break (MPa) | | | 25 | 26 | 27 | 27 | 27 | 29 | 30 | 32 | 33 | 26 |
| | Amount of Adherent Foreign Matter | | | ○ | ○ | ○ | ○ | ⊚ | ⊚ | ○ | ⊚ | ○ | ○ |
| | Recyclability | | | Δ | ○ | ○ | Δ | Δ | Δ | Δ | Δ | ○ | Δ |

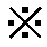 Parentheses = MFR (g/10 min), Density (g/cm³), Graft rate (mass%)

**<Table-2B>**

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Regrind composition formulation (parts by mass) | PE | | UF230 | 77 | 77 | 77 | 77 | 80 | 60 | 80 |
| | EVOH | | DC3203RB | 10 | 10 | 10 | 10 | 10 | 10 | |
| | Ny | | 1022 | | | | | | | 10 |
| | c-1 | | M512 | 10 | 10 | 10 | 10 | 10 | 10 | 10 |
| | Compatibilizer | Example of the Present Invention | d-1 (32, 0.870, 0.1) | | | | | | | |
| | | | d-2 (28, 0.870, 0.5) | | | | | | | |
| | | | d-3 (27, 0.870, 0.9) | | | | | | 30 | |
| | | | d-4 (22, 0.870, 0.5) | | | | | | | |
| | | Comparative Example | d-5 (2, 0885, 0.6) | 3 | | | | | | |
| | | | d-6 (13, 0.885, 0.5) | | 3 | | | | | |
| | | | d-7 (59, 0.893, 0.6) | | | 3 | | | | |
| | | | d-8 (640, 0.879, 0.9) | | | | 3 | | | |
| Evaluation results | Transparency | | | Δ | Δ | Δ | ○ | × | Δ | Δ |
| | Internal HAZE(%) | | | 15 | 15 | 14 | 13 | 26 | 14 | 18 |
| | Tensile Strength at Break (MPa) | | | 25 | 25 | 27 | 28 | 20 | 27 | 26 |
| | Amount of Adherent Foreign Matter | | | Δ | Δ | Δ | Δ | ○ | Δ | × |
| | Recyclability | | | Δ | ○ | Δ | × | × | × | × |

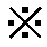 Parentheses = MFR (g/10 min), Density (g/cm³), Graft rate (mass%)

### [Preparation and evaluation of polypropylene-based regrind composition]

### <Example 11>

3 parts by mass of the modified ethylene/butene copolymer (d-1) of Synthesis Example 1 was added as a compatibilizer to Novatec (registered trademark) EA7AD, which is polypropylene manufactured by Japan Polyethylene Co., Ltd.: 77 parts by mass, EVOH (registered trademark) DC3203RB manufactured by Mitsubishi Chemical Corporation: 10 parts by mass, and Modic (registered trademark) P604V manufactured by Mitsubishi Chemical Corporation: 10 parts by mass, and mixed by dry blending. This mixture was melt-kneaded using a twin-screw extruder (manufactured by Japan Steel Works, Ltd., TEX25*α*III, D = 25 mm*φ*, L/D = 52.5) at a set temperature of 210 °C, a screw rotation speed of 400 rpm, and an extrusion rate of 20 kg / h. Then, a pellet-like regrind composition was obtained by strand cutting. Evaluations (1) to (5) were performed on the obtained regrind composition. The evaluation results are shown in Table-3.

### <Examples 12 to 18, Comparative Examples 8 to 12>

Regrind compositions were obtained in the same manner as in Example 11, except that the compounding composition were changed as shown in Table-3. Evaluations (1) to (5) were performed on the obtained regrind compositions. The evaluation results are shown in Table-3.

### [Table 3]

**<Table-3>**

| | | | | Example 11 | Example 12 | Example 13 | Example 14 | Example 15 | Example 16 | Example 17 | Example 18 | Comparative Example 8 | Comparative Example 9 | Comparative Example 10 | Comparative Example 11 | Comparative Example 12 |
|---|---|---|---|---|---|---|---|---|---|---|---|---|---|---|---|---|
| Regrind composition formulation (parts by mass) | PP | | EA7AD | 77 | 77 | 79 | 77 | 75 | 70 | 60 | 82 | 77 | 77 | 77 | 80 | 50 |
| | EVOH | | DC3203RB | 10 | 10 | 10 | 10 | 10 | 10 | 10 | 5 | 10 | 10 | 10 | 10 | 10 |
| | c-2 | | P604V | 10 | 10 | 10 | 10 | 10 | 10 | 10 | 10 | 10 | 10 | 10 | 10 | 10 |
| | Compatibilizer | Example of the Present Invention | d-1 (32, 0.870, 0.1) | 3 | | | | | | | | | | | | |
| | | | d-2 (28, 0.870, 0.5) | | 3 | | | | | | | | | | | |
| | | | d-3 (27, 0.870, 0.9) | | | 1 | 3 | 5 | 10 | 20 | 3 | | | | | 30 |
| | | Comparative Example | d-5 (2, 0.885, 0.6) | | | | | | | | | 3 | | | | |
| | | | d-7 (59, 0.893, 0.6) | | | | | | | | | | 3 | | | |
| | | | d-8 (640, 0.879, 0.9) | | | | | | | | | | | 3 | | |
| Evaluation results | Transparency | | | Δ | Δ | Δ | Δ | Δ | ○ | ○ | ○ | Δ | Δ | Δ | × | ○ |
| | Internal HAZE(%) | | | 21 | 20 | 21 | 20 | 17 | 13 | 15 | 14 | 18 | 19 | 25 | 29 | 16 |
| | Tensile Strength at Break (MPa) | | | 26 | 27 | 27 | 27 | 28 | 29 | 27 | 26 | 27 | 25 | 22 | 18 | 26 |
| | Amount of Adherent Foreign Matter | | | Δ | Δ | Δ | ○ | ○ | ⊚ | Δ | ⊚ | Δ | Δ | Δ | ○ | × |
| | Recyclability | | | Δ | Δ | Δ | Δ | Δ | Δ | Δ | Δ | × | × | × | × | Δ |

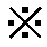 Parentheses = MFR (g/10 min), Density (g/cm³), Graft rate (mass%)

### [Discussion]

### <Polyethylene-based regrind composition>

As shown in Table-2A, in Examples 1 to 10 using the polymer compositions of the present invention containing the modified ethylene/butene copolymers (d-1) to (d-4) of the present invention as compatibilizers, contaminant adhesion amount were eliminated or reduced without impairing the transparency. In addition, excellent results were obtained in terms of internal HAZE, mechanical properties, and recyclability.

On the other hand, Comparative Example 1 using a modified ethylene/butene copolymer (d-5) having an MFR of 2 g/10 minutes, Comparative Example 2 using a modified ethylene/butene copolymer (d-6) having an MFR of 13 g/10 minutes, and Comparative Example 3 using a modified ethylene/butene copolymer (d-7) having an MFR of 59 g/10 minutes were slightly opaque and had a large amount of adhered contaminant. These resulted in inferior effects as compatibilizers.

Comparative Example 4 using a modified ethylene/octene copolymer (d-8) having an MFR of 640 g/10 minutes had high transparency, but the amount of adhered contaminant was slightly large. Moreover, in the evaluation of recyclability, the internal HAZE was greatly deteriorated, and the tensile breaking strength was also lowered, resulting in poor recyclability.

In Comparative Examples 5 and 7 where which no compatibilizer was used, although the amount of adhered contaminant was small or absent, the film was opaque or slightly opaque and was inferior in recyclability.

In Comparative Example 6 where which the content of the modified ethylene/butene copolymer (d-3) was high, recyclability was poor.

### <Polypropylene-based regrind composition>

As shown in Table-3, Examples 11 to 18 using the polymer compositions of the present invention containing the modified ethylene/butene copolymers (d-1) to (d-3) of the present invention as compatibilizers, contaminant adhesion was eliminated or reduced without impairing the transparency. In addition, excellent results were obtained in terms of internal HAZE, and mechanical properties.

On the other hand, Comparative Example 8 using a modified ethylene/butene copolymer (d-5) having an MFR of 2 g/10 minutes, and Comparative Example 9 using a modified ethylene/butene copolymer (d-7) having an MFR of 59 g/10 minutes resulted in poor recyclability.

Comparative Example 10 using the modified ethylene/octene copolymer (d-8) having an MFR of 640 g/10 minutes resulted in poor recyclability.

In Comparative Example 11 where which no compatibilizer was used, although the amount of adhered contaminant was small, the film was opaque and the recyclability is poor.

Comparative Example 12 having high content of the modified ethylene/butene copolymer (d-3) resulted in a large amount of adhered contaminant.

Although the present invention has been described in detail with reference to particular embodiments, it will be apparent to those skilled in the art that various changes may be made thereto without departing from the spirit and scope of the present invention.

The present application is based on Japanese Patent Application No. 2021-079460 and Japanese Patent Application No. 2021-079461 filed on May 10, 2021 which are herein incorporated in their entireties by reference.

## Claims

1. A polymer composition comprising 100 parts by mass of a polyolefin-based polymer (a), 0.1 to 20 parts by mass of a polar polymer (b), and 0.1 to 25 parts by mass of an acid-modified polyolefin (d), the polar polymer (b) being at least one selected from an ethylene-vinyl alcohol-based copolymer (b1) and a polyamide-based polymer (b2),
wherein the acid-modified polyolefin (d) is a modified ethylene copolymer, the modified ethylene copolymer being a copolymer of an ethylene monomer and one or more *α*-olefin monomers having 4 to 8 carbon atoms, and the copolymer being modified with an unsaturated carboxylic acid and/or an anhydride thereof,
wherein the modified ethylene copolymer has a melt flow rate (MFR: 190°C, 2.16 kg) of 15 to 39 g/10 minutes.

2. The polymer composition according to claim 1, further comprising an acid-modified polyolefin (c) having a melt flow rate (MFR: 190°C, 2.16 kg) of 0.01 g/10 min or more and less than 15 g/10 min.

3. The polymer composition according to claim 2, wherein the content of the acid-modified polyolefin (c) is 0.1 to 20 parts by mass with respect to 100 parts by mass of the polyolefin-based polymer (a).

4. The polymer composition according to claim 1, wherein the acid-modified polyolefin (d) has a density of 0.855 to 0.895 g/cm³.

5. The polymer composition according to claim 1, wherein the acid-modified polyolefin (d) has a graft ratio of 0.1 to 1.0% by mass.

6. The polymer composition according to claim 1, wherein the acid-modified polyolefin (d) is a modified ethylene/butene copolymer.

7. The polymer composition according to claim 1, wherein the polyolefin polymer (a) is polyethylene.

8. The polymer composition according to claim 1, wherein the polar polymer (b) is an ethylene-vinyl alcohol-based copolymer (b1) having an ethylene unit content of 20 mol% or more and less than 50 mol%.

9. A molded article obtained by molding the polymer composition according to any one of claims 1 to 8.

10. A multilayer packaging material having a layer containing the polymer composition according to any one of claims 1 to 8.

11. A method for producing the polymer composition according to any one of claims 1 to 8, wherein the method comprises a process of melting and kneading the polyolefin-based polymer (a), the polar polymer (b) being at least one selected from the ethylene-vinyl alcohol-based copolymer (b1) and the polyamide-based polymer (b2), and the acid-modified polyolefin (d).

12. A method for producing the multilayer packaging material according to claim 10, wherein the method comprises a process of melt-molding the polyolefin-based polymer (a), the polar polymer (b) being at least one selected from the ethylene-vinyl-based alcohol copolymer (b1) and the polyamide-based polymer (b2), and the acid-modified polyolefin (d).
